# EUROPEAN PATENT SPECIFICATION

(11) **EP 2 626 251 B1**
(45) Date of publication and mention of the grant of the patent: **24.12.2014**
(21) Application number: 13152294.8
(22) Date of filing: 23.01.2013
(51) Int. Cl.: B60R 16/03, G07C 5/08, H01H 9/10, H02H 3/087

(54) **Device and method for improving safety in a vehicle**
Vorrichtung und Verfahren zur Verbesserung der Sicherheit in einem Fahrzeug
Dispositif et procédé pour améliorer la sécurité dans un véhicule

(30) Priority: 09.02.2012 SE 1250095
(43) Date of publication of application: 14.08.2013
(73) Proprietor: Scania CV AB, 151 87 Södertälje (SE)
(72) Inventor: Poli, Ninos, 151 60 Södertälje (SE); Brunnsåker, Magnus, 151 71 Södertälje (SE)

(56) References cited:
- EP-B1- 1 085 638
- WO-A1-2009/130163
- DE-A1- 3 327 532
- US-A1- 2007 182 249

## Description

### TECHNICAL FIELD

The present invention relates to a method for improving safety. The invention relates also to a computer programme product comprising programme code for a computer for implementing a method according to the invention. The invention also relates to a device for improving safety in a vehicle and a vehicle equipped with the device.

### BACKGROUND

Some vehicles today are ADR-compliant (ADR, *European **A**greement Concerning the International Carriage of **D**angerous Goods by **R**oad*). This relates, for example, to heavy vehicles, such as trucks. Certain regulations and performance requirements apply to ADR-compliant vehicles. These vehicles may be used for the transportation of, for example, fire-hazard goods, for example fuels such as petrol, ethanol or diesel.

An ADR-compliant vehicle therefore comprises components and subsystems which satisfy particular safety requirements.

A number of countries also impose legal requirements establishing that a heavy vehicle must be equipped with a tachograph. The use of tachographs in vehicles may also be associated with certain specific regulations.

ADR-compliant vehicles may be equipped with a battery isolator adapted to interrupt the power supply from batteries intended for this purpose to the vehicle's various electronic systems under certain circumstances, such as the loading or unloading of fire-hazard goods. The battery isolator is enclosed, minimising the risk of sparking when the power supply to said electronic systems is activated or deactivated. According to one example, an ADR-compliant vehicle may be equipped with a device comprising at least one vehicle battery for supplying power, via a first line, to an electronic system in the vehicle. The vehicle battery may further be adapted to supply power, via a second line, to a tachograph. The first line comprises a circuit breaker to interrupt the power supply via said first line under certain circumstances.

It should be noted that some regulations require a continuous supply of power to the tachograph. Electronic systems in the vehicle will therefore not be supplied with power by its batteries during the loading or unloading of fire-hazard goods, whereas the tachograph is continuously supplied with power during said activities.

However, to ensure a high level of safety during said activities and circumstances, said second line is required to comprise a fuse adapted to interrupt the power supply at a predetermined amperage, e.g. 1 A or 100 mA. This may be necessary in situations where said tachograph is inadvertently short circuited or excessively high currents occur in said second line for other reasons, e.g. through tampering with the tachograph. Said fuse may be what is known as a non-reversible fuse. This fuse, also called an ADR fuse, is necessary from a legal requirement perspective and is also housed in an enclosure. ADR-compliant vehicles today therefore have a separate electric line comprising said ADR fuse mounted between at least one vehicle battery and the tachograph which may thus have a constant power supply even in said circumstances where electronic systems in the vehicle have to be disconnected from the power supply. Said enclosure may therefore take the form of a housing for the battery isolator in an ADR-compliant vehicle.

A disadvantage of the aforesaid configuration is that, when said ADR fuse has been tripped, the entire battery isolator must be replaced, which is both time-consuming and costly.

EP 1085638B1 describes a battery isolator for ADR-compliant vehicles comprising current-limiting devices for tachographs.

DE 20023511U describes a battery isolator for ADR-compliant vehicles comprising current-limiting devices for tachographs.

WO 09130163 describes a digital tachograph and associated electrical fuse.

### SUMMARY OF THE INVENTION

An object of the present invention is to propose a novel and advantageous method for improving safety in a vehicle.

Another object of the invention is to propose a novel and advantageous device and a novel and advantageous computer programme for improving safety in a vehicle.

A further object of the invention is to propose a method, a device and a computer programme for robustly and reliably improving safety in a vehicle.

A further object of the invention is to propose a method, a device and a computer programme for improving safety in an ADR-compliant vehicle in a cost-effective manner.

These objects are achieved by a method of vehicle supervision according to claim 1.

By mounting in series with the ADR fuse an electronic fuse which is adapted to interrupt the power supply in the line connecting the vehicle's batteries and the tachograph at a lower amperage than that at which the ADR fuse is tripped, the ADR fuse can be protected from being tripped by a temporary or continuous overload. The electronic fuse may be provided with a function for automatic reset after said overload has ended.

This achieves with advantage the desired effect of eliminating previously unavoidable servicing measures associated with such circumstances, which is both cost-effective and time-saving.

This reduces the previous need to install spare parts to cater for an inadvertent increase in amperages associated with power supply to the tachograph or other devices supplied continuously with power in an ADR-compliant vehicle under certain circumstances, for example the loading or unloading of fire-hazard goods.

According to one aspect of the invention, a method is proposed for improving safety in a vehicle comprising at least one power source for supplying power, via a first line, to an electrically operated apparatus in the vehicle and, via a second line, to at least one electronic device, where said first line comprises a breaker device for interrupting the power supply via said first line under certain circumstances, and where said at least one electronic device is intended to be supplied with power continuously, which second line comprises a safety device adapted to interrupt the power supply at a predetermined amperage and which breaker device is housed in an enclosure. The method comprises the step of interrupting the power supply in said second line at an amperage lower than said predetermined amperage by means of a further safety device which is situated in said second line upstream of said safety device.

According to one aspect of the invention, a method is proposed for improving safety in a vehicle comprising at least one power source for supplying power, via a first line, to an electrically operated apparatus in the vehicle and, via a second line, to at least one electronic device, where said first line comprises a breaker device for interrupting the power supply via said first line under certain circumstances, and where said at least one electronic device is intended to be supplied with power continuously, which second line comprises a safety device adapted to interrupt the power supply at a predetermined amperage and which breaker device is housed in an enclosure. The method comprises the step of arranging or mounting a further safety device in said second line, upstream of said safety device, which further safety device is adapted to interrupt the power supply in said second line at an amperage lower than said predetermined amperage.

Said further safety device may be an electronic fuse. Said further safety device does not need to be replaced after it has interrupted the power supply via the second line.

Said further safety device may be a reset-type device and in this case be arranged to reconnect power when the current in said second line falls to amperages lower than the amperage at which said further safety device trips. This will eliminate any need to replace the safety device (the ADR fuse) after it has been tripped by temporarily excessively high amperages.

The method further comprises the step of:
- arranging said further safety device in said enclosure.

The method further comprises the step of:
- mounting said further safety device in said enclosure.

Said further safety device may be arranged in said enclosure. In this way, ADR classification can be obtained for said further safety device. This achieves an improvement in safety in an ADR-compliant vehicle during the loading and unloading of fire-hazard goods. In this way, the risk of any sparks from said further safety device coming into contact with, for example, vaporised fuel is minimised.

Said at least one electronic device may be a tachograph.

The vehicle may be ADR-compliant. The device for improving safety may be ADR-compliant. The device may comprise a battery isolator which may comprise said breaker device, safety device and said further safety device. The ADR fuse may be ADR-compliant. Said breaker device may be ADR-compliant. Said safety device may be ADR-compliant. Said further safety device may be ADR-compliant.

The method may further comprise the steps of:
- measuring the amperage in said second line;
- comparing said measured amperage with a predetermined value; and
- interrupting the power supply via said second line by means of said further safety device if said measured amperage exceeds said predetermined value.

The method may further comprise the step of:
- manually operating means for activating said breaker device to cause it to trip. This achieves a user-friendly method according to an aspect of the invention. Said means may be in the form of a push-button or a selector switch with two active positions. A first position may correspond to a status where the breaker device has interrupted the power supply to said electrically operated apparatus. A second position may correspond to a status where the breaker device has activated the power supply to said electrically operated apparatus.

Said certain circumstances may, for example, include refuelling of the vehicle and/or the loading of goods and/or the unloading of goods.

Software for improving safety according to the invention can be installed in a control unit of the vehicle during manufacture of the vehicle. A purchaser of the vehicle may thus have the possibility of selecting the function of the method as an option. Alternatively, software which comprises programme code for executing the innovative method for improving safety may be installed in a control unit of the vehicle on the occasion of upgrading at a service station, in which case the software may be loaded into a memory of the control unit. Implementation of the innovative method is therefore cost-effective.

Software comprising programme code for improving safety can easily be updated or replaced. Different portions of the software which comprise programme code for improving safety can also be replaced independently of one another. This modular configuration is advantageous from a maintenance perspective.

According to an aspect of the invention, a proposed device for improving safety in a vehicle comprises at least one power source for supplying power, via a first line, to an electrically operated apparatus in the vehicle and, via a second line, to at least one electronic device, where said first line comprises a breaker device for interrupting the power supply via said first line under certain circumstances, and where said at least one electronic device is intended to be supplied with power continuously, which second line comprises a safety device adapted to interrupt the power supply at a predetermined amperage and which breaker device is housed in an enclosure. The device comprises a further safety device adapted to interrupt the power supply in said second line at an amperage lower than said predetermined amperage, which further safety device is arranged in said second line upstream of said safety device.

Said further safety device may be an electronic fuse.

In the device, said further safety device may be a reset-type device and in this case be arranged to reconnect power when the current in said second line falls to amperages lower than the amperage at which said further safety device is intended to trip.

The device may further comprise an enclosure which may be adapted to house said further safety device.

In the device, said at least one electronic device may be a tachograph.

The device may further comprise:
- means for measuring the amperage in said second line;
- means for comparing said measured amperage with a predetermined value; and
- means for interrupting the power supply via said second line by means of said further safety device if said measured amperage exceeds said predetermined value.

The device may further comprise:
- means for activating, by manual operation, said breaker device to cause it to trip.

Said certain circumstances may, for example, include refuelling of the vehicle and/or the loading of goods and/or the unloading of goods.

The aforesaid objects are also achieved with a vehicle comprising the device for improving safety. The vehicle may be a motor vehicle. The vehicle may be a truck, bus or passenger car.

According to an aspect of the invention, a computer programme proposed for improving vehicle safety comprises programme code stored on a computer-readable medium in order to cause an electronic control unit or another computer connected to the electronic control unit to perform the steps according to any one of claims 1-7.

According to an aspect of the invention, a computer programme proposed for improving vehicle safety comprises programme code for causing an electronic control unit or another computer connected to the electronic control unit to perform the steps according to any one of claims 1-7.

According to an aspect of the invention, a computer programme proposed for improving safety in a vehicle comprises at least one power source for supplying power, via a first line, to an electrically operated apparatus in the vehicle and, via a second line, to at least one electronic device, where said first line comprises a breaker device for interrupting the power supply via said first line under certain circumstances, and where said at least one electronic device is intended to be supplied with power continuously, which second line comprises a safety device adapted to interrupt the power supply at a predetermined amperage and which breaker device is housed in an enclosure, which computer programme comprises programme code stored on a computer-readable medium in order to cause an electronic control unit or another computer connected to the electronic control unit to perform the steps according to any one of claims 1-7.

According to an aspect of the invention, a computer programme proposed for improving safety in a vehicle comprises at least one power source for supplying power, via a first line, to an electrically operated apparatus in the vehicle and, via a second line, to at least one electronic device, where said first line comprises a breaker device for interrupting the power supply via said first line under certain circumstances, and where said at least one electronic device is intended to be supplied with power continuously, which second line comprises a safety device adapted to interrupt the power supply at a predetermined amperage and which breaker device is housed in an enclosure, which computer programme comprises programme code for causing an electronic control unit or another computer connected to the electronic control unit to perform the steps according to any one of claims 1-7.

According to an aspect of the invention, a proposed computer programme product comprises a programme code stored on a computer-readable medium for performing the method steps according to any one of claims 1-7 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not limited to the specific details described. One skilled in the art who has access to the teachings herein will recognise further applications, modifications and incorporations within other fields, which are within the scope of the invention.

### CONCISE DESCRIPTION OF THE DRAWINGS

For a more complete understanding of the present invention and further objects and advantages thereof, the detailed description set out below should be read together with the accompanying drawings, in which the same reference notations denote similar items in the various drawings, and in which:
Figure 1 illustrates schematically a vehicle according to an embodiment of the invention;
Figure 2a illustrates schematically a device in the vehicle depicted in Figure 1, according to an embodiment of the invention;
Figure 2b illustrates schematically a device in the vehicle depicted in Figure 1, according to an embodiment of the invention;
Figure 3 illustrates schematically a device in the vehicle depicted in Figure 1, according to an embodiment of the invention;
Figure 4a illustrates schematically a flowchart of a method according to an embodiment of the invention;
Figure 4b illustrates schematically in more detail a flowchart of a method according to an embodiment of the invention; and
Figure 5 illustrates schematically a computer according to an embodiment of the invention.

### DETAILED DESCRIPTION OF THE DRAWINGS

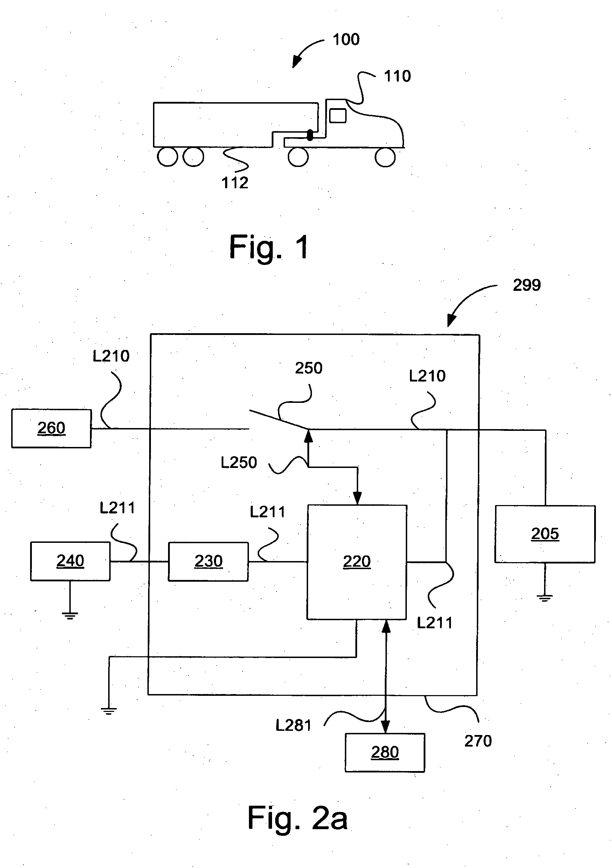

Figure 1 depicts a side view of a vehicle 100. The exemplified vehicle 100 comprises a tractor unit 110 with a trailer 112. The vehicle may be a heavy vehicle, such as a truck or a bus. The vehicle may alternatively be a passenger car.

The term "link" refers herein to a communication link which may be a physical connection such as an opto-electronic communication line, or a non-physical connection such as a wireless connection, e.g. a radio link or microwave link.

The term "line" refers herein to an electrical line which is a physical line, such as an electrical lead or cable. Said line may be an insulated line. Said line may comprise an electrically conductive element consisting, for example, of copper.

Figure 2a depicts a device 299 for improving safety in the vehicle 100. The device 299 is arranged in the tractor unit 110.

The device 299 comprises at least one power source 205. The power source 205 may be any suitable power source. According to one embodiment, said at least one power source 205 comprises a battery. According to another embodiment, said at least one power source 205 comprises two batteries connected in series. According to an example, said at least one power source 205 comprises two vehicle batteries connected in series. According to an example, said two vehicle batteries connected in series may provide 24-volt DC voltage.

Said at least one power source 205 is adapted to feed an appropriate current la to said at least one electrically operated apparatus 260 in the vehicle 100. Said at least one electrically operated apparatus 260 may comprise one or more electrical subsystems in the vehicle 100.

Said at least one power source 205 is adapted to feed an appropriate current la to at least one electrically operated apparatus 260 in the vehicle 100 via a first line L210. Said first line L210 may comprise a breaker device 250. Said breaker device 250 is adapted to interrupt the power supply to said at least one electrically operated apparatus 260, where appropriate. Said breaker device 250 is also adapted to activate the power supply to said at least one electrically operated apparatus 260, where appropriate.

Said at least one power source 205 is adapted to feed an appropriate current lb to an electronic device 240 in the vehicle 100. Said electronic device 240 may be a tachograph in the vehicle 100. The tachograph 240 may already be arranged in a vehicle cab in the vehicle 100.

Said at least one power source 205 is adapted to feed an appropriate current lb to an electronic device 240 via a second line L211. Said second line L211 comprises a safety device 230. Said safety device 230 is adapted to interrupt the power supply to said electronic device 240 at a predetermined amperage ladr. Said predetermined amperage ladr may be any suitable amperage, e.g. 1 A or 100 mA.

According to one embodiment, said safety device 230 is an ADR fuse. The ADR fuse is ADR-compliant. According to one embodiment , the ADR fuse 230 is what is known as a non-reversible fuse, which means that the ADR fuse does not need to be replaced with a new fuse when it has tripped at amperages exceeding said predetermined amperage ladr.

According to the invention, an existing further safety device 220 is provided. Said second line L211 comprises said further safety device 220. Said at least one power source 205 is therefore adapted to supply power to the electronic device 240 via the second line L211 and in this case via the safety device 230 and the further safety device 220. The safety device 230 is situated downstream of the further safety device 220, as shown in Figure 2a.

According to one embodiment , said further safety device 220 is adapted to interrupt the power supply to said electronic device 240 at an amperage lower than said predetermined amperage ladr at which said safety device 230 is adapted to interrupt the power supply. Said further safety device 220 may be adapted to interrupt the power supply to said electronic device 240 at any appropriate amperage lth. Said further safety device 220 may be adapted to interrupt the power supply to said electronic device 240 at a predetermined amperage lth. Said predetermined amperage lth is lower than said predetermined amperage ladr. In this case, said further safety device will interrupt the power supply to the electronic device 240 before the safety device 230 can interrupt the power supply to the electronic device 240.

Said safety device 230 may be called a first safety device. Said further safety device 220 may be called a second safety device. Said safety device 230 may be called an ADR fuse. Said further safety device 220 may be called a protection fuse.

Said further safety device 220 may comprise suitable electronics for implementing the invention. Said further safety device may be implemented in the form of hardware only or as a combination of hardware and software.

Said further safety device 220 may comprise an electronic fuse, for example a transistor switch. Said transistor switch may be adapted to only conduct current at amperages lower than lth, which is lower than the amperage ladr at which the safety device 230 is adapted to interrupt the power supply to the electronic device 240.

According to one embodiment , said further electronic safety device 220 may consist of an electronic current limiter. According to an aspect of the present invention, said electronic current limiter may be adapted to limit amperages through said safety device 230 and in this way prevent it from being tripped. In this case, the safety device 230 may therefore be protected by, when desirable, interrupting the power supply to the electronic device 240, or alternatively by limiting the power supply to the electronic device 240, by means of said further safety device 220. Said further safety device may be an electronic fuse or a current limiter.

Said further safety device 220 is adapted to communicate with a switching means 280 via a link L281. A driver or operator of the vehicle can control the switching means 280 in order to cause an interruption in the power supply to the electrically operated apparatus 260 by means of the breaker device 250. According to one embodiment , the switching means 280 is signal-connected to the further safety device 220. In this way, the switching means 280 is adapted to send a signal containing information about interrupting the power supply via said first line L210 to the further safety device 220.

The further safety device 220 is adapted to communicate with said breaker device 250 via a link L250. The further safety device 220 is adapted to control said breaker device 250 via a link L250. In this case, the further safety device 220 is adapted to control the power supply to said electrically operated apparatus 260 by means of said breaker device 250, which therefore functions as a selector switch or circuit breaker. Said further safety device 220 is adapted to interrupt the power supply to said electronically operated apparatus 260 on the basis of signals received from the switching means 280.

Correspondingly, a driver or operator of the vehicle can control the switching means 280 to effect activation of the power supply to the electrically operated apparatus 260 by means of the breaker device 250. In this case, said further safety device 220 is adapted to activate the power supply to said electrically operated apparatus 260 on the basis of signals received from the switching means 280.

Said predetermined amperage ladr may be any suitable amperage, e.g. 1 A or 100 mA. In this case, said predetermined amperage lth may, for example, be 0.5 A or 75 mA respectively.

According to one embodiment, the breaker device 250, the safety device 230 and the further safety device 220 are housed in an enclosure 270. The enclosure 270 may be a closed housing. The enclosure 270 is adapted to shield these housed components in order to satisfy ADR regulations. Any risk of igniting, for example, ambient fuel vapour can thus be reduced or eliminated. The enclosure 270 may be manufactured, for example, from plastic or a suitable metallic alloy. The enclosure 270 and the housed components, in particular the breaker device 250, may also be called a battery isolator.

According to an alternative embodiment, said existing safety device 230 may be mounted outside said enclosure 270. In this case, said existing safety device 230 may be mounted between the enclosure 270 and the electronic device 240. According to this example, the safety device is housed in an enclosure intended for this purpose which also satisfies ADR regulations. According to an alternative embodiment, said existing safety device 230 may be mounted in said electronic device 240. According to this example, the safety device is housed in an enclosure intended for this purpose which also satisfies ADR regulations. According to one embodiment, a tachograph 240 in the vehicle 100 may therefore comprise an ADR fuse 230.

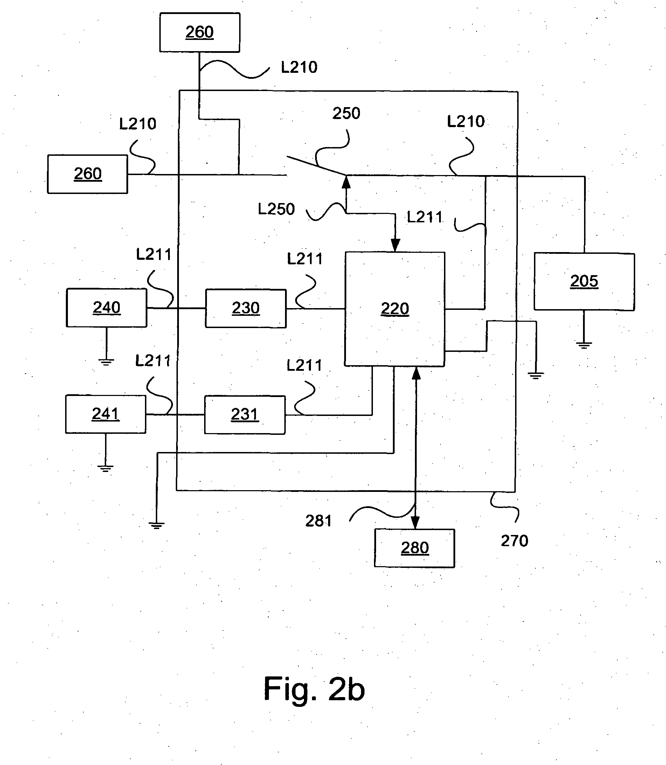

Figure 2b depicts a device 299 in the vehicle 100. The device 299 illustrated in Figure 2b is a variant of the device illustrated in Figure 2a.

This embodiment example illustrates that the vehicle 100 may be equipped with a number of electrically operated apparatus items 260. These apparatus items 260 may consist of different electrical systems in the vehicle 100, which, according to ADR regulations, must be shut down in certain situations and circumstances, such as the loading or unloading of fire-hazard goods. All of the electrically operated apparatus items can be shut down (have their power supply interrupted) by means of the breaker device 250. According to an example, each electrically operated apparatus item 260 may be associated with a respective breaker device, in which case these breaker devices are arranged to function, and be arranged in a manner corresponding to that for the breaker device 250 described herein.

Figure 2b further illustrates that, according to an example, there may be more than one electronic device 240, i.e. more units than the tachograph in the vehicle 100, which are intended to be operated in accordance with the innovative method. This example includes an electronic device 241, which must also be continuously supplied with power under certain circumstances described herein (e.g. loading of fire-hazard goods). The electronic device 241 is adapted to be supplied with power via a line L211. The line L211 comprises a safety device 231 which may be identical to the ADR fuse 230 described herein. According to an aspect of the invention, the further safety device 220 is adapted to interrupt the power supply to the electronic device 241 in a manner corresponding to that for the electronic device 240. It should be noted in this case that the further safety device 220 does not necessarily have to be adapted to interrupt the power supply to the electronic unit 241 at the same amperage as for the electronic device 240. The further safety device 220 may be adapted to interrupt the power supply at any appropriate amperage. In this case, the further safety device 220 is adapted to interrupt the power supply to the electronic device 241 at a predetermined threshold value which is lower than that for the safety device 231.

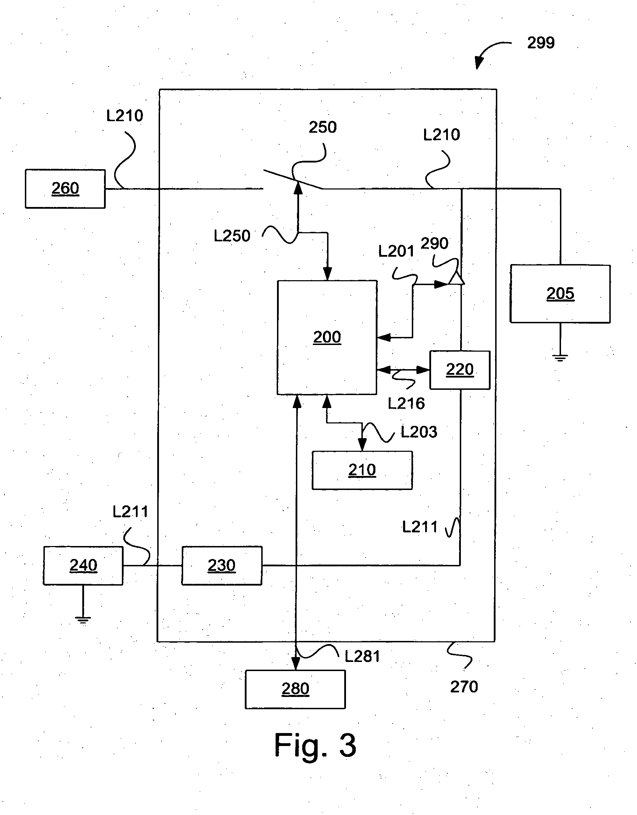

Figure 3 depicts a device 299 in the vehicle 100 according to an embodiment of the present invention.

In this case, a first control unit 200 is adapted to communicate with a power meter 290 via a link L201. The power meter 290 is adapted to continuously measure a prevailing amperage lb in the second line L211. The power meter 290 is adapted to continuously send signals containing information about said measured amperage lb to the first control unit 200 via the link L201.

The first control unit 200 is adapted to communicate with the breaker device 250. The first control unit 200 is adapted to control said breaker device 250 by means of signals via a link L250. In this case, the first control unit 200 is adapted to cause the breaker device 250 to interrupt or activate the power supply to the electrically operated apparatus 260 via the line L210.

The first control unit is adapted to communicate with the further safety device 220. The first control unit is adapted to control said further safety device 220. In this case, the first control unit 200 is adapted to cause said further safety device 220 to interrupt or activate the power supply to the electronic device 240 via the line L211.

The first control unit 200 is adapted to communicate with the switching means 280 via a link L281.

It should be noted that, according to this example, the first control unit 200 is intended to function substantially identically to the further safety device 220, but that, in this case, the invention is implemented partly as software stored in one or more memories in the first control unit 200.

A second control unit 210 is adapted to communicate with the first control unit 200 via a link L203. The second control unit 210 may be detachably connected to the first control unit 200. The second control unit 210 may be a control unit external to the vehicle 100. The second control unit 210 may be adapted to perform the innovative method steps according to the invention. The second control unit 210 may be used for transferring software to the first control unit 200, particularly software for implementing the innovative method. The second control unit 210 may alternatively be adapted to communicate with the first control unit 200 via an internal network in the vehicle. The second control unit 210 may be adapted to perform functions substantially similar to those of the first control unit, e.g., where necessary, to interrupt the power supply to the electronic device 240 on the basis of the signals received containing the measured amperage lb.

Substantially three main embodiments have been described herein (with reference to Figs. 2a, 2b and 3 respectively), but it should be noted that different combinations of these may be implemented according to different aspects of the invention. For example, in order to achieve the innovative method, the further safety device 220 may be implemented as a circuit board or a computer device with stored software. The device may, for example, comprise a tachograph and further electronic devices requiring protection against temporary amperage increases, e.g. in the event of a short circuit of any of these electronic devices.

The first control unit 200 and/or the second control unit 210 may be arranged inside or outside the enclosure 270. Where a control unit is arranged outside the enclosure 270, a separate enclosure may be with advantage provided. This enables ADR regulations to be satisfied.

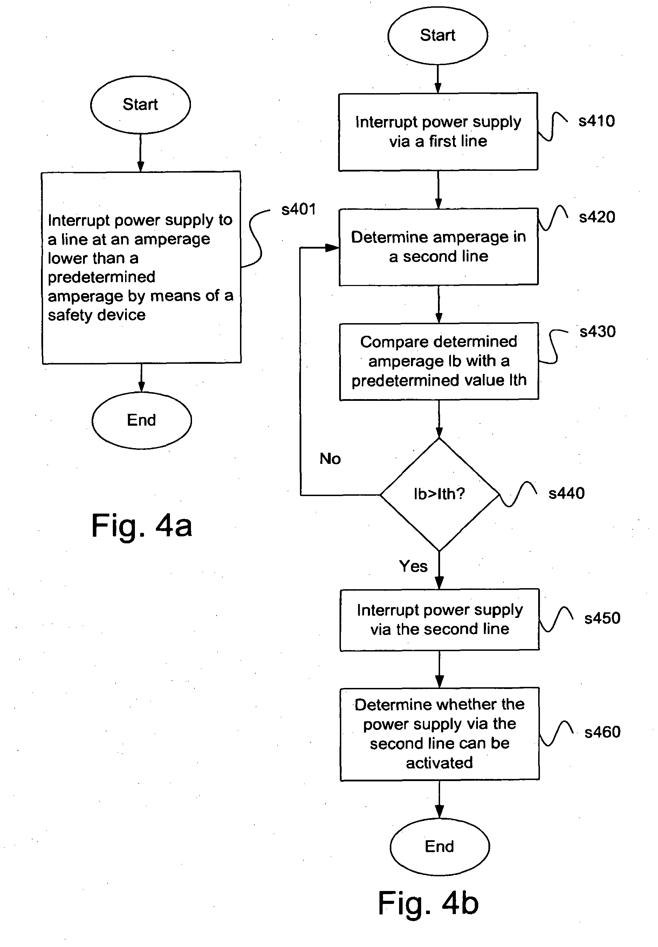

Figure 4a illustrates schematically a flowchart of a method for improving safety in a vehicle comprising at least one power source for supplying power, via a first line, to an electrically operated apparatus in the vehicle and, via a second line, to at least one electronic device, where said first line comprises a breaker device for interrupting the power supply via said first line under certain circumstances, and where said at least one electronic device is intended to be supplied with power continuously, which second line comprises a safety device adapted to interrupt the power supply at a predetermined amperage and which breaker device is housed in an enclosure. The method comprises a first method step s401. The step s401 comprises the step of - interrupting the power supply in said second line at a lower amperage than said predetermined amperage by means of a further safety device which is arranged in said second line upstream of said safety device. The method ends after step s401.

Figure 4b illustrates schematically a flowchart of a method for a method for improving safety in a vehicle comprising at least one power source for supplying power, via a first line, to an electrically operated apparatus in the vehicle and, via a second line, to at least one electronic device, where said first line comprises a breaker device for interrupting the power supply via said first line under certain circumstances, and where said at least one electronic device is intended to be supplied with power continuously, which second line comprises a safety device adapted to interrupt the power supply at a predetermined amperage and which breaker device is housed in an enclosure, according to an embodiment of the invention.

The method comprises a first method step s410. The method step s410 comprises the step of interrupting the power supply in the first line L210. This can be performed manually by a driver or operator of the vehicle 100. According to an example, a driver of the vehicle 100 can, by means of the switching means 280, manually interrupt the power supply to the vehicle's electronic system 260 via the first line L210. This is required in certain circumstances, for example during the loading or unloading of fire-hazard goods in the vehicle 100. It should be noted that the power supply to the electronic unit 240 via the second line L211 is not interrupted in this case. After the method step s410, a subsequent method step s420 is performed.

The method step s420 comprises the step of determining a prevailing amperage lb in the second line L211. This can be effected by means of the further safety device 220. Alternatively, this can be effected by means of the power meter 290 and the first control unit 200. After the method step s420, a subsequent method step s430 is performed.

The method step s430 comprises the step of comparing the measured current lb with the predetermined value lth. This can be effected by means of the further safety device 220. Alternatively, this can be effected by means of the first control unit 200 or the second control unit 210. After the method step s430, a subsequent method step s440 is carried out.

The method step s440 comprises the step of determining whether the measured current lb exceeds the predetermined value lth. This can be effected by means of the further safety device 220. Alternatively, this can be effected by means of the first control unit 200 or the second control unit 210. If the measured current lb exceeds the predetermined value lth, i.e. yes, a subsequent method step s450 is performed. If the measured current lb does not exceed the predetermined value lth, i.e. no, method step s420 is repeated.

The method step s450 comprises the step of interrupting the power supply to the electronic device 240 via the second line L211. This can be effected by means of the further safety device 220. Alternatively, this can be effected by means of a circuit breaker intended for this purpose, not shown in the drawings. The first control unit 200 may in one embodiment be adapted to interrupt, where appropriate, the power supply to the electronic device 240 via the second line L211 by means of said circuit breaker. After the method step s450, a subsequent method step s460 is carried out.

The method step s460 comprises the step of determining whether the power supply via the second line L211 can be activated This can be effected by determining whether the re-measured current lb is lower than the predetermined value lth. If so, the power supply via the second line L211 can be activated. According to an aspect of the invention, this can be effected by means of the resettable further safety device 220. The method is concluded after the method step s460.

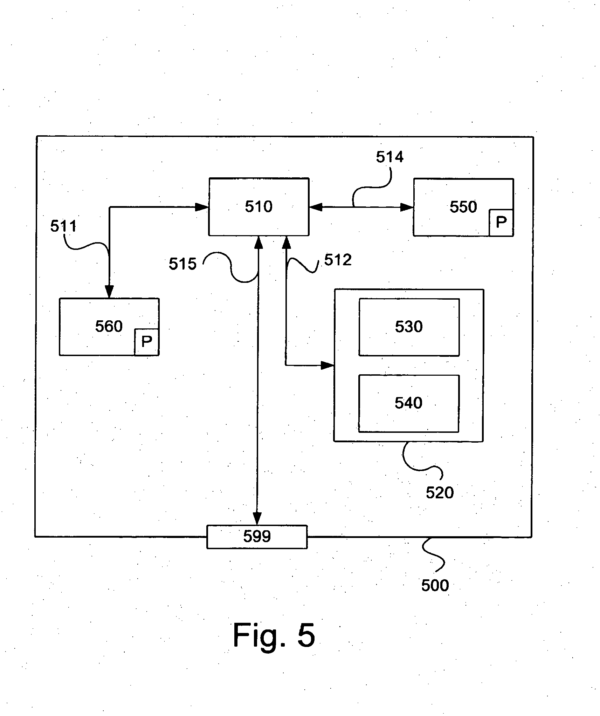

Figure 5 depicts a diagram of an embodiment of a device 500. The control units 200 and 210 described with reference to Figure 3 may in one embodiment comprise the device 500. The battery isolator 270 and in particular the control device 220 described with reference to Figures 2a and 2b may in one embodiment comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transmission unit, an event counter and an interruption controller (not depicted). The non-volatile memory 520 has also a second memory element 540.

A proposed computer programme P comprises routines for interrupting the power supply to the second line L211 at a lower amperage than said predetermined amperage lth by means of said further safety device 220, arranged in said second line L211 upstream of said safety device 230, according to the innovative method.

The programme P comprises routines for continuously determining a prevailing amperage lb in the second line L211.

The programme P comprises routines for comparing said determined amperage lb with a predetermined value lth. The programme P comprises routines for interrupting the power supply via said second line L211 by means of said further safety device 220 if said measured amperage lb exceeds said predetermined value lth.

The programme P comprises routines for activating the breaker device to cause it to interrupt the power supply via the first line L210.

The programme P comprises routines for interrupting the power supply to the electrically operated apparatus 260 via the first line L210. The programme P comprises routines for measuring and determining a prevailing amperage lb in the second line L211. The programme P comprises routines for comparing the determined and measured current lb with the predetermined value lth. The programme P comprises routines for determining whether the measured current lb exceeds the predetermined value lth. The programme P comprises routines for interrupting the power supply to the electronic device 240 via the second line L211. The programme P comprises routines for determining whether the power supply via the second line L211 can be activated This can be effected by determining whether the re-measured current lb is lower than the predetermined value lth. If so, the power supply via the second line L211 can be re-activated.

The programme P may be stored in an executable form or compressed form in a memory of 560 and/or in a read/write memory 550.

Where it is stated that the data processing unit 510 performs a certain function, it means that the data processing unit 510 effects a certain part of the programme which is stored in the memory 560 or a certain part of the programme which is stored in the read/write memory 550.

The data processing device 510 may communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is intended to communicate with the data processing unit 510 via a data bus 514. The links L201, L203, L216, L250 and L281 for example may be connected to the data port 599 (see Figure 2a, Figure 2b and Figure 3).

When data are received on the data port 599, they are stored temporarily in the second memory element 540. When input data received have been temporarily stored, the data processing unit 510 will be ready to effect code execution in a manner described above. According to one embodiment, signals received on the data port 599 contain information about a prevailing amperage lb in the second line L211.

The signals received on the data port 599 may be used by the device 500 to record the measured amperage lb in the second line L211 in a memory in the device 500. The signals received on the data port 599 may be used by the device 500 to compare said measured amperage lb with a predetermined value lth. If said measured amperage lb exceeds said predetermined value lth, the device 500 can interrupt the power supply via said second line L211 by means of the further safety device 220.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive nor to limit the invention to the variants described. Many modifications and variations will obviously be apparent to one skilled in the art. The embodiments have been chosen and described in order best to make clear the principles of the invention and its practical applications and hence to make it possible for one skilled in the art to understand the invention for various embodiments and with the various modifications appropriate to the intended use.

## Claims

1. Method for improving safety in a vehicle (100; 110) comprising at least one power source (205) for supplying power, via a first line (L210), to an electrically operated apparatus (260) in the vehicle (100; 110) and, via a second line (L211), to at least one electronic device (240), where said first line (L210) comprises a breaker device (250) for interrupting the power supply via said first line (L210) under certain circumstances, and where said at least one electronic device (240) is intended to be supplied with power continuously, which second line (L211) comprises a safety device (230) adapted to interrupt the power supply at a predetermined amperage (lb1) and which breaker device (250) is housed in an enclosure (270),
**characterised by** the step of:
- interrupting the power supply to said second line (L211) at a lower amperage (lth) than said predetermined amperage (lb1) by means of a further safety device (220) which is arranged in said enclosure (270), which further safety device (220) is arranged in said second line (L211) upstream of said safety device (230) and where said further safety device (220) is a reset-type device and in this case reconnects the power when the current in said second line (L211) falls to amperages lower than the amperage (lth) at which said further safety device (220) trips.

2. Method according to claim 1 where said further safety device (220) is an electronic fuse.

3. Method according to claim 1, where said at least one electronic device (240) is a tachograph.

4. Method according to any one of the foregoing claims, where the vehicle (100; 110) is ADR-compliant.

5. Method according to any one of the foregoing claims, further comprising the steps of:
- measuring (s420) the amperage in said second line (L211);
- comparing (s430) said measured amperage with a predetermined value (lth); and
- interrupting (s450) the power supply via said second line (L211) by means of said further safety device (220) if said measured amperage (lb) exceeds said predetermined value (lth).

6. Method according to any one of the foregoing claims, further comprising the step of:
- manually operating means (280) for activating said breaker device (250) to cause said breaker device (250) to trip.

7. Method according to any one of the foregoing claims, where said certain circumstances include, for example, the refuelling of the vehicle and/or the loading of goods and/or the unloading of goods.

8. Device for improving safety in a vehicle (100; 110) comprising at least one power source (205) for supplying power, via a first line (L210), to an electrically operated apparatus (260) in the vehicle (100; 110) and, via a second line (L211), to at least one electronic device (240), where said first line (L210) comprises a breaker device (250) for interrupting the power supply via said first line (L210) under certain circumstances, and where said at least one electronic device (240) is intended to be supplied with power continuously, which second line (L211) comprises a safety device (230) adapted to interrupt the power supply at a predetermined amperage (lb1) and which breaker device (250) is housed in an enclosure (270),
**characterised by**
- a further safety device (220) which is arranged in said enclosure (270) and which is adapted to interrupt the power supply to said second line (L211) at a lower amperage (Ith) than said predetermined amperage (lb1), which further safety device (220) is arranged in said second line (L211) upstream of said safety device (230) and where said further safety device (220) is a reset-type device and in this case is adapted to reconnect the power when the current in said second line (L211) falls to amperages lower than the amperage (lth) at which said further safety device (220) is adapted to trip .

9. Device according to claim 8, where said further safety device (220) is an electronic fuse.

10. Device according to claim 8, where said at least one electronic device (240) is a tachograph.

11. Device according to any one of claims 8-10, where the vehicle (100; 110) is ADR-compliant.

12. Device according to any one of claims 8-11, further comprising:
- means (220; 200; 210; 290) for measuring the amperage (lb) in said second line (L211);
- means (220; 200; 210) for comparing said measured amperage (lb) with a predetermined value (lth); and
- means (220; 200; 210) for interrupting the power supply via said second line (L211) by means of said further safety device (220) if said measured amperage (lb) exceeds said predetermined value (lth).

13. Device according to any one of claims 8-12, further comprising:
- means (280; 220; 200; 210) for activating, by manual operation, said breaker device (250) to cause said breaker device (250) to trip.

14. Device according to any one of claims 8-13, where said certain circumstances include, for example, the refuelling of the vehicle and/or the loading of goods and/or the unloading of goods.

15. Motor vehicle (100; 110) comprising a device (299) according to any one of claims 8-14.

16. Motor vehicle (100; 110) according to claim 15, which motor vehicle is any one from among truck, bus or passenger car.

17. Computer programme (P) for improving safety in a vehicle (100; 110) comprising at least one power source (205) for supplying power, via a first line (L210), to an electrically operated apparatus (260) in the vehicle (100; 110) and, via a second line (L211), to at least one electronic device (240), where said first line (L210) comprises a breaker device (250) for interrupting the power supply via said first line (L210) under certain circumstances, and where said at least one electronic device (240) is intended to be supplied with power continuously, which second line (L211) comprises a safety device (230) adapted to interrupt the power supply at a predetermined amperage (lb1) and which breaker device (250) is housed in an enclosure (270), which computer programme (P) comprises programme code for causing an electronic control unit (200; 500) or another computer (210; 500) connected to the electronic control unit (200; 500) to perform the steps according to any one of claims 1-7.

18. Computer programme product comprising a programme code stored on a computer-readable medium for performing the method steps according to any one of claims 1-7 when said computer programme is run on an electronic control unit (200; 500) or another computer (210; 500) connected to the electronic control unit (200; 500).

## Patentansprüche

1. Verfahren zum Verbessern der Sicherheit in einem Fahrzeug (100; 110), das wenigstens eine Energiequelle (205) umfasst, zum Bereitstellen von Energie über eine erste Leitung (L21 0) für eine elektrisch betriebene Vorrichtung (260) in dem Fahrzeug (100; 110) und über eine zweite Leitung (L211) für wenigstens eine elektronische Anordnung (240), wobei die erste Leitung (L210) eine Schalteranordnung (250) umfasst, zum Unterbrechen der Energieversorgung über die erste Leitung (L210) unter bestimmten Umständen, und wobei die wenigstens eine elektronische Anordnung (240) dafür vorgesehen ist, kontinuierlich mit Energie versorgt zu werden, wobei die zweite Leitung (L211) eine Sicherheitsanordnung (230) umfasst, die dazu ausgebildet ist, die Energieversorgung bei einer vorbestimmten Amperezahl (Ib1) zu unterbrechen, und wobei die Schalteranordnung (250) in einem Gehäuse (270) angeordnet ist,
**gekennzeichnet, durch** den Schritt:
- Unterbrechen der Energieversorgung der zweiten Leitung (L211) bei einer geringeren Amperezahl (Ith) als der vorbestimmten Amperezahl (Ib1), mit Hilfe einer weiteren Sicherheitsanordnung (220), die in dem Gehäuse (270) angeordnet ist, wobei die weitere Sicherheitsanordnung (220) in der zweiten Leitung (L211) vorgelagert zu der Sicherheitsanordnung (230) angeordnet ist, und wobei die weitere Sicherheitsanordnung (220) eine zurücksetzbare Anordnung ist und in diesem Fall die Energie wieder anschließt, wenn die Stromstärke in der zweiten Leitung (L211) auf Amperezahlen unterhalb der Amperezahl (Ith) fällt, bei denen die weitere Sicherheitsanordnung (220) schaltet.

2. Verfahren nach Anspruch 1, wobei die weitere Sicherheitsanordnung (220) eine elektronische Sicherung ist.

3. Verfahren nach Anspruch 1, wobei die wenigstens eine elektronische Anordnung (240) ein Fahrtenschreiber ist.

4. Verfahren nach einem der vorhergehenden Ansprüche, wobei das Fahrzeug (100; 110) ADR-(Abkürzung: Europäisches Übereinkommen über die internationale Beförderung gefährlicher Güter auf der Straße)konform ist.

5. Verfahren nach einem der vorhergehenden Ansprüche, das ferner die Schritte umfasst:
- Messen (s420) der Amperezahl in der zweiten Leitung (L211);
- Vergleichen (s430) der gemessenen Amperezahl mit einem vorbestimmten Wert (Ith); und
- Unterbrechen (s450) der Energieversorgung über die zweite Leitung (L211), mit Hilfe der weiteren Sicherheitsanordnung (220), wenn die gemessene Amperezahl (Ib) den vorbestimmten Wert (Ith) übersteigt.

6. Verfahren nach einem der vorhergehenden Ansprüche, das des Weiteren den Schritt umfasst:
- Manuelles Bedienen von Mitteln (280) zum Aktivieren der Schalteranordnung (250), um die Schalteranordnung (250) dazu zu veranlassen, zu schalten.

7. Verfahren nach einem der vorhergehenden Ansprüche, wobei die bestimmten Umstände zum Beispiel das Auftanken des Fahrzeugs und/oder das Beladen von Waren und/oder das Entladen von Waren umfassen.

8. Anordnung zum Verbessern der Sicherheit in einem Fahrzeug (100; 110), die wenigstens eine Energiequelle (205) umfasst, zum Bereitstellen von Energie über eine erste Leitung (L21 0) für eine elektrisch betriebene Vorrichtung (260) in dem Fahrzeug (100; 110) und über eine zweite Leitung (L211) für wenigstens eine elektronische Anordnung (240), wobei die erste Leitung (L210) eine Schalteranordnung (250) umfasst, zum Unterbrechen der Energieversorgung über die erste Leitung (L210) unter bestimmten Umständen, und wobei die wenigstens eine elektronische Anordnung (240) dafür vorgesehen ist, kontinuierlich mit Energie versorgt zu werden, wobei die zweite Leitung (L211) eine Sicherheitsanordnung (230) umfasst, die dazu ausgebildet ist, die Energieversorgung bei einer vorbestimmten Amperezahl (Ib1) zu unterbrechen, und wobei die Schalteranordnung (250) in einem Gehäuse (270) angeordnet ist,
**gekennzeichnet durch**
- eine weitere Sicherheitsanordnung (220), die in dem Gehäuse (270) angeordnet ist, und die dazu ausgebildet ist, die Energieversorgung zu der zweiten Leitung (L211) bei einer geringeren Amperezahl (Ith) als der vorbestimmten Amperezahl (Ib1) zu unterbrechen, wobei die weitere Sicherheitsanordnung (220) in der zweiten Leitung (L211) vorgelagert zu der Sicherheitsanordnung (230) angeordnet ist, und wobei die weitere Sicherheitsanordnung (220) eine zurücksetzbare Anordnung ist und in dem Fall dazu ausgebildet ist, die Energie wiederanzuschließen, wenn die Stromstärke in der zweiten Leitung (L211) auf Amperezahlen unterhalb der Amperezahl (Ith) fällt, bei der die weitere Sicherheitsanordnung (220) dazu ausgebildet ist, zu schalten.

9. Anordnung nach Anspruch 8, wobei die weitere Sicherheitsanordnung (220) eine elektronische Sicherung ist.

10. Anordnung nach Anspruch 8, wobei die wenigstens eine elektronische Anordnung (240) ein Fahrtenschreiber ist.

11. Anordnung nach einem der Ansprüche 8 bis 10, wobei das Fahrzeug (100; 110) ADR-(Abkürzung: Europäisches Übereinkommen über die internationale Beförderung gefährlicher Güter auf der Straße)konform ist.

12. Anordnung nach einem der Ansprüche 8 bis 11, die ferner umfasst:
- Mittel (220; 200; 210; 290) zum Messen der Amperezahl (Ib) in der zweiten Leitung (L211);
- Mittel (220; 200; 210) zum Vergleichen der gemessenen Amperezahl (Ib) mit dem vorbestimmten Wert (Ith); und
- Mittel (220; 200; 210) zum Unterbrechen der Energieversorgung über die zweite Leitung (L211), mit Hilfe der weiteren Sicherheitsanordnung (220), wenn die gemessene Amperezahl (Ib) den vorbestimmten Wert (Ith) übersteigt.

13. Anordnung nach einem der Ansprüche 8 bis 12, die weiter umfasst:
- Mittel (280; 220; 200; 210) zum Aktivieren der Schalteranordnung (250), durch manuelle Bedienung, um die Schalteranordnung (250) dazu zu veranlassen, zu schalten.

14. Anordnung nach einem der Ansprüche 8 bis 13, wobei die bestimmten Umstände zum Beispiel das Auftanken des Fahrzeugs und/oder das Beladen von Waren und/oder das Entladen von Waren umfassen.

15. Kraftfahrzeug (100; 110), das eine Anordnung (299) nach einem der Ansprüche 8 bis 14 umfasst.

16. Kraftfahrzeug (100; 110) nach Anspruch 15, wobei das Kraftfahrzeug ein Lastkraftwagen, Bus oder Personenkraftwagen ist.

17. Computerprogramm (P) zum Verbessern der Sicherheit in einem Fahrzeug (100; 110), das wenigstens eine Energiequelle (205) umfasst, zum Bereitstellen von Energie über eine erste Leitung (L210) für eine elektrisch betriebene Vorrichtung (260) in dem Fahrzeug (100; 110) und über eine zweite Leitung (L211) für wenigstens eine elektronische Anordnung (240), wobei die erste Leitung (L21 0) eine Schalteranordnung (250) umfasst, zum Unterbrechen der Energieversorgung über die erste Leitung (L21 0) unter bestimmten Umständen, und wobei die wenigstens eine elektronische Anordnung (240) dafür vorgesehen ist, kontinuierlich mit Energie versorgt zu werden, wobei die zweite Leitung (L211) eine Sicherheitsanordnung (230) umfasst, die dazu ausgebildet ist, die Energieversorgung bei einer vorbestimmten Amperezahl (Ib1) zu unterbrechen und wobei die Schalteranordnung (250) in einem Gehäuse (270) angeordnet ist, wobei das Computerprogramm (P) Programmcode umfasst, um eine elektronische Steuereinheit (200; 500) oder einen weiteren Computer (210; 500), der mit der elektronischen Steuereinheit (200; 500) verbunden ist, dazu zu veranlassen, die Schritte nach einem der Ansprüche 1 bis 7 auszuführen.

18. Computerprogrammprodukt, das einen Programmcode umfasst, der auf einem computerlesbaren Mittel gespeichert ist, um die Verfahrensschritte nach einem der Ansprüche 1 bis 7 auszuführen, wenn das Computerprogramm auf einer elektronischen Steuereinheit (200; 500) oder einem weiteren Computer (210; 500), der mit der elektronischen Steuereinheit (200; 500) verbunden ist, ausgeführt wird.

## Revendications

1. Procédé pour améliorer la sécurité dans un véhicule (100 ; 110) comprenant au moins une source d'alimentation (205) pour fournir de l'électricité, via une première ligne (L210), à un appareil électrique (260) dans le véhicule (100 ; 110) et, via une seconde ligne (L211), à au moins un dispositif électronique (240), ladite première ligne (L210) comprenant un dispositif disjoncteur (250) pour interrompre l'alimentation électrique via ladite première ligne (L210) dans certaines circonstances, et ledit au moins un dispositif électronique (240) étant destiné à être continument alimenté en électricité, laquelle seconde ligne (L211) comprend un dispositif de sécurité (230) adapté pour interrompre l'alimentation électrique à un ampérage prédéterminé (Ib1) et lequel dispositif disjoncteur (250) est logé dans un boîtier (270),
**caractérisé par** l'étape consistant à :
- interrompre l'alimentation électrique de ladite seconde ligne (L211) à un ampérage (Ith) inférieur audit ampérage prédéterminé (Ib1) au moyen d'un dispositif de sécurité additionnel (220) qui est logé dans ledit boîtier (270), lequel dispositif de sécurité additionnel (220) est disposé sur ladite seconde ligne (L211) en amont dudit dispositif de sécurité (230), où ledit dispositif de sécurité additionnel (220) est un dispositif du type à réinitialisation et, dans ce cas, reconnecte l'alimentation lorsque le courant sur ladite seconde ligne (L211) chute à un ampérage inférieur à l'ampérage (Ith) auquel ledit dispositif de sécurité additionnel (220) se déclenche.

2. Procédé selon la revendication 1, dans lequel ledit dispositif de sécurité additionnel (220) est un fusible électronique.

3. Procédé selon la revendication 1, dans lequel ledit au moins un dispositif électronique (240) est un tachygraphe.

4. Procédé selon l'une quelconque des revendications précédentes, dans lequel le véhicule (100 ; 110) est compatible avec l'ADR.

5. Procédé selon l'une quelconque des revendications précédentes, comprenant en outre les étapes consistant à :
- mesurer (s420) l'ampérage sur ladite seconde ligne (L211) ;
- comparer (s430) ledit ampérage mesuré à une valeur prédéterminée (Ith) ; et
- interrompre (s450) l'alimentation électrique via ladite seconde ligne (L211) au moyen dudit dispositif de sécurité additionnel (220) si ledit ampérage mesuré (Ib) excède ladite valeur prédéterminée (Ith).

6. Procédé selon l'une quelconque des revendications précédentes, comprenant en outre l'étape consistant à :
- actionner manuellement des moyens (280) pour activer ledit dispositif disjoncteur (250) afin de faire en sorte que ledit dispositif disjoncteur (250) se déclenche.

7. Procédé selon l'une quelconque des revendications précédentes, dans lequel lesdites certaines circonstances incluent, par exemple, le réapprovisionnement en combustible du véhicule et/ou le chargement de marchandises et/ou le déchargement de marchandises.

8. Dispositif pour améliorer la sécurité dans un véhicule (100 ; 110) comprenant au moins une source d'alimentation (205) pour fournir de l'électricité, via une première ligne (L210), à un appareil électrique (260) dans le véhicule (100 ; 110) et, via une seconde ligne (L211), à au moins un dispositif électronique (240), ladite première ligne (L210) comprenant un dispositif disjoncteur (250) pour interrompre l'alimentation électrique via ladite première ligne (L210) dans certaines circonstances, et ledit au moins un dispositif électronique (240) étant destiné à être continument alimenté en électricité, laquelle seconde ligne (L211) comprend un dispositif de sécurité (230) adapté pour interrompre l'alimentation électrique à un ampérage prédéterminé (Ib1) et lequel dispositif disjoncteur (250) est logé dans un boîtier (270),
**caractérisé par** :
- un dispositif de sécurité additionnel (220) qui est logé dans ledit boîtier (270) et qui est adapté pour interrompre l'alimentation électrique de ladite seconde ligne (L211) à un ampérage (Ith) inférieur audit ampérage prédéterminé (Ib1), lequel dispositif de sécurité additionnel (220) est disposé sur ladite seconde ligne (L211) en amont dudit dispositif de sécurité (230), où ledit dispositif de sécurité additionnel (220) est un dispositif du type à réinitialisation et, dans ce cas, est adapté pour reconnecter l'alimentation lorsque le courant sur ladite seconde ligne (L211) chute à un ampérage inférieur à l'ampérage (Ith) auquel ledit dispositif de sécurité additionnel (220) est adapté pour se déclencher.

9. Dispositif selon la revendication 8, dans lequel ledit dispositif de sécurité additionnel (220) est un fusible électronique.

10. Dispositif selon la revendication 8, dans lequel ledit au moins un dispositif électronique (240) est un tachygraphe.

11. Dispositif selon l'une quelconque des revendications 8 à 10, dans lequel le véhicule (100 ; 110) est compatible avec l'ADR.

12. Dispositif selon l'une quelconque des revendications 8 à 11, comprenant en outre :
- des moyens (220 ; 200 ; 210 ; 290) pour mesurer l'ampérage (Ib) sur ladite seconde ligne (L211) ;
- des moyens (220 ; 200 ; 210) pour comparer ledit ampérage mesuré (Ib) à une valeur prédéterminée (Ith) ; et
- des moyens (220 ; 200 ; 210) pour interrompre l'alimentation électrique via ladite seconde ligne (L211) au moyen dudit dispositif de sécurité additionnel (220) si ledit ampérage mesuré (Ib) excède ladite valeur prédéterminée (Ith).

13. Dispositif selon l'une quelconque des revendications 8 à 12, comprenant en outre :
- des moyens (280 ; 220 ; 200 ; 210) pour activer, par actionnement manuel, ledit dispositif disjoncteur (250) afin de faire en sorte que ledit dispositif disjoncteur (250) se déclenche.

14. Dispositif selon l'une quelconque des revendications 8 à 13, dans lequel lesdites certaines circonstances incluent, par exemple, le réapprovisionnement en combustible du véhicule et/ou le chargement de marchandises et/ou le déchargement de marchandises.

15. Véhicule à moteur (100 ; 110) comprenant un dispositif (299) selon l'une quelconque des revendications 8 à 14.

16. Véhicule à moteur (100 ; 110) selon la revendication 15, lequel véhicule à moteur est l'un quelconque parmi un camion, un bus ou une voiture automobile.

17. Programme informatique (P) pour améliorer la sécurité dans un véhicule (100 ; 110) comprenant au moins une source d'alimentation (205) pour fournir de l'électricité, via une première ligne (L210), à un appareil électrique (260) dans le véhicule (100 ; 110) et, via une seconde ligne (L211), à au moins un dispositif électronique (240), ladite première ligne (L210) comprenant un dispositif disjoncteur (250) pour interrompre l'alimentation électrique via ladite première ligne (L210) dans certaines circonstances, et ledit au moins un dispositif électronique (240) étant destiné à être continument alimenté en électricité, laquelle seconde ligne (L211) comprend un dispositif de sécurité (230) adapté pour interrompre l'alimentation électrique à un ampérage prédéterminé (Ib1) et lequel dispositif disjoncteur (250) est logé dans un boîtier (270), lequel programme informatique (P) comprend un code de programme destiné à faire en sorte qu'une unité de commande électronique (200 ; 500) ou un autre ordinateur (210 ; 500) connecté à l'unité de commande électronique (200 ; 500) mette en oeuvre les étapes selon l'une quelconque des revendications 1 à 7.

18. Produit de programme informatique comprenant un code de programme stocké sur un support lisible par un ordinateur pour la mise en oeuvre des étapes de procédé selon l'une quelconque des revendications 1 à 7, dans lequel ledit programme informatique est exécuté sur une unité de commande électronique (200 ; 500) ou un autre ordinateur (210 ; 500) connecté à l'unité de commande électronique (200 ; 500).
